# EUROPEAN PATENT APPLICATION

(11) **EP 1 511 340 A1**
(43) Date of publication of application: **02.03.2005**
(21) Application number: 02733269.1
(22) Date of filing: 31.05.2002
(51) Int. Cl.: H04Q 7/38

(54) **COMMUNICATION SYSTEM**

(71) Applicant: MITSUBISHI DENKI KABUSHIKI KAISHA, Tokyo 100-8310 (JP)
(72) Inventor: NIWANO, Kazuhito, MITSUBISHI DENKI K. K., Chiyoda-ku, Tokyo 100-8310 (JP)
(74) Representative: Popp, Eugen, Dr.
(86) International application number: PCT/JP2002/005392
(87) International publication number: WO 2003/103328

(57) **Abstract**

A communication system includes a mobile station (2) capable of transmitting a plurality of control channels (DPCCH and HS-DPCCH). At least one of the control channels (HS-DPCCH) has pilot data (Pilot) placed separately at a plurality of positions within a transmission unit time (Subframe) to reduce the deterioration in reference phase detection performance in the reception of a base station (1), and to reduce the deterioration in the base station receiving performance.

## Description

### TECHNICAL FIELD

The present invention relates to a communication system for mobile communication for carrying out high-speed radio data communication.

### BACKGROUND ART

A plurality of communication schemes called a third generation are adopted as IMT-2000 by ITU (International Telecommunication Union) as radio communication schemes for mobile units typified by mobile telephones. Among them, W-CDMA (Wideband Code Division Multiple Access) was put into commercial service in Japan in 2001.

The W-CDMA scheme aims to achieve a communication rate of about 2 Mbps (megabits per second) per mobile station at the maximum. The first specification was drawn up by the 3GPP (Third-Generation Partnership Project), one of the standardization groups, as Release 1999, a version standardized in 1999.

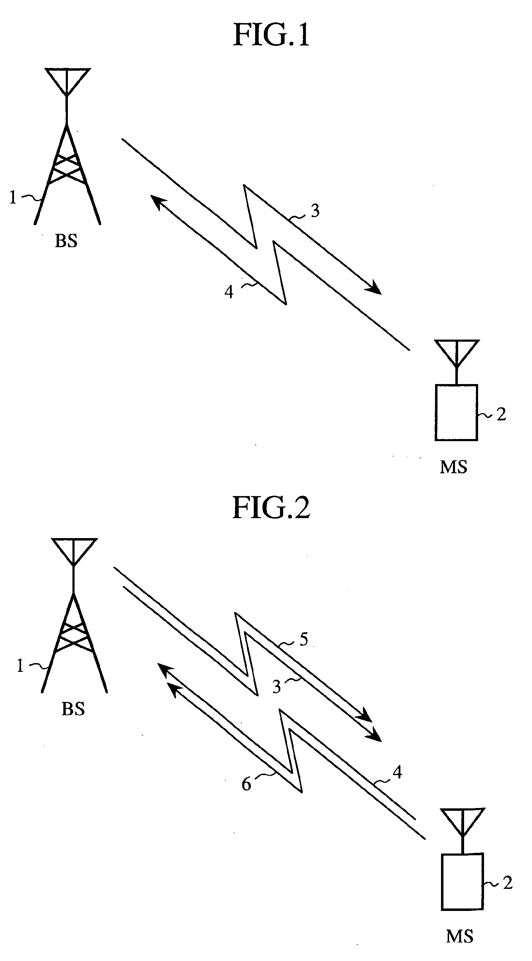

Fig. 1 is a schematic diagram showing a conventional communication system based on the W-CDMA scheme. In Fig. 1, the reference numeral 1 designates a base station (BS), 2 designates a mobile station (MS) that carries out radio communication with the base station 1, 3 designates a downlink (dedicated channel) used by the base station 1 for transmitting data to the mobile station 2, and 4 designates an uplink (dedicated channel) used by the mobile station 2 for transmitting data to the base station 1. Here, the term "dedicated channel" refers to a channel established for each mobile station.

Next, the operation will be described.

The downlink 3 is composed of a DPDCH (Dedicated Physical Data CHannel), a dedicated channel for data, and a DPCCH (Dedicated Physical Control CHannel) , a dedicated channel for control. The two channels are time division multiplexed to be transmitted.

As for the downlink 3, each downlink for a destination mobile station is separated from the other channels by multiplying a separation code (the so-called spreading code), and is transmitted after being multiplied by a base station identification code (the so-called scramble code) assigned to the base station 1. Thus, the channels for the individual mobile stations are separated by the spreading codes, and the individual base stations are separated by the scramble codes. The foregoing processing is based on the 3GPP standard and utilizes well-known techniques.

The uplink 4 is composed of a DPDCH (Dedicated Physical Data CHannel), a dedicated channel for data transmitted from each mobile station, and a DPCCH (Dedicated Physical Control CHannel) , a dedicated channel for control. The two channels are IQ multiplexed to be transmitted.

As for the uplink 4, the DPDCH and DPCCH are each multiplied by a different spreading code to separate the channels, are each IQ multiplexed and transmitted after being multiplied by a mobile station identification code (the so-called scramble code) assigned to the mobile station 2. Thus, the individual channels of each mobile station are separated by the spreading code, and the mobile stations are separated by the scramble codes. The foregoing processing is based on the 3GPP standard and utilizes well-known techniques.

Recently, a large volume packet data transmission method has become popular in which a transmission rate of the downlink 3 is higher than that of the uplink 4, which is typified by the utilization of the Internet. In view of this, to further increase the rate of the downlink data to be transmitted from the base station 1 to the mobile station 2, HSDPA (High Speed Downlink Packet Access) that adds a new downlink 5, which is exclusively utilized for the high-speed packet transmission, to the conventional 3GPP downlink 3 has been proposed and studied (see "High Speed Downlink Packet Access: Physical Layer Aspects (Release 5)" of 3GPP specification TR25.858v5.0.0 (2002-03)). Fig. 2 is a diagram showing a configuration of the HSDPA. In Fig. 2, the reference numeral 5 designates a downlink exclusively utilized for the high-speed packet transmission, and 6 designates an uplink. The remaining components are the same as those of Fig. 1.

Next, the operation will be described.

The downlink 5 transmits packets using a so-called shared channel common to a plurality of mobile stations. The shared channel is divided into a HS-PDSCH (High Speed-Physical Downlink Shared CHannel), a channel for data, and a HS-SCCH (High Speed-Shared Control CHannel), a channel for control. It is decided that the HS-PDSCH employs AMC (Adaptive Modulation and Coding) which enables a modulation scheme (QPSK, 16 QAM and the like) and an error-correcting coding rate to be adaptively varied in accordance with a downlink environment (performance). In addition, because of packet transmission, retransmission control (ARQ: Auto Repeat reQuest) is carried out for reception error.

Furthermore, both the channels (HS-PDSCH and HS-SCCH) are subjected to channel separation and base station identification just as the channels (DPDCH and DPCCH) of the other downlink (downlink 3), and are transmitted.

In addition, to add the new downlink 5, it has been studied that the mobile station 2 transmits to the base station 1 response data (the so-called ACK/NACK) to a packet, and downlink performance information data (QI: Quality Indicator) necessary for the AMC. As shown in Fig. 2, to transmit both the data, an exclusive dedicated channel for control (uplink 6) is added.

As for the uplink 6, it has been studied to separate and identify the channel using the spreading code for the channel separation, and to carry out additional IQ multiplexing to the conventional uplink 4 in the same manner as the channel of the conventional uplink 4. In TR25.858, the exclusive control channel is referred to as "HS-DPCCH" (High Speed-Dedicated Physical Control CHannel).

As for the ACK/NACK response, it has been studied to transmit from the mobile station onlywhenadownlink packet is transmitted, and not transmitted unless a packet is transmitted. As for the QI, it is studied to transmit from the mobile station 2 to the base station 1 in a variable period manner. Accordingly, the individual transmission is performed independently, and non-transmission is possible independently.

The transmission period and timing offset of the QI is sent from the base station 1 as parameters, and their values (period k, and offset) have been studied to be specified by the 3GPP standard. Since the k and offset are parameters, they can be altered in accordance with a variable rate and the like of the downlink environment halfway through the communication.

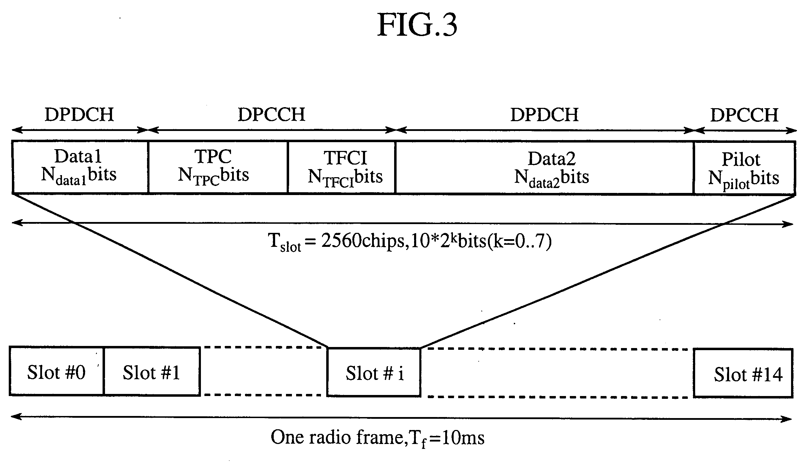

Here, the format of the channels in each link before spreading will be describedwith reference to Figs. 3-7. As formore detailed description, refer to the 3GPP standard TS25.211 V5. 0.0 "Physical channels andmapping of transport channels onto physical channels (FDD) (Release 5)".

Fig. 3 is a diagram illustrating a format of the channels (DPDCH/DPCCH) of the downlink 3 before spreading.

Conventionally, the channel transmission uses a slot as a fundamental transmission time unit, and a frame having 15 slots as one unit. The length of one frame is 10 msec.

The time division multiplexed format includes a first data field (Data1), a command field for uplink transmit power control (TPC), a transport format combination indicator field (TFCI), a second data field (Data2), and a pilot data field for synchronization (Pilot).

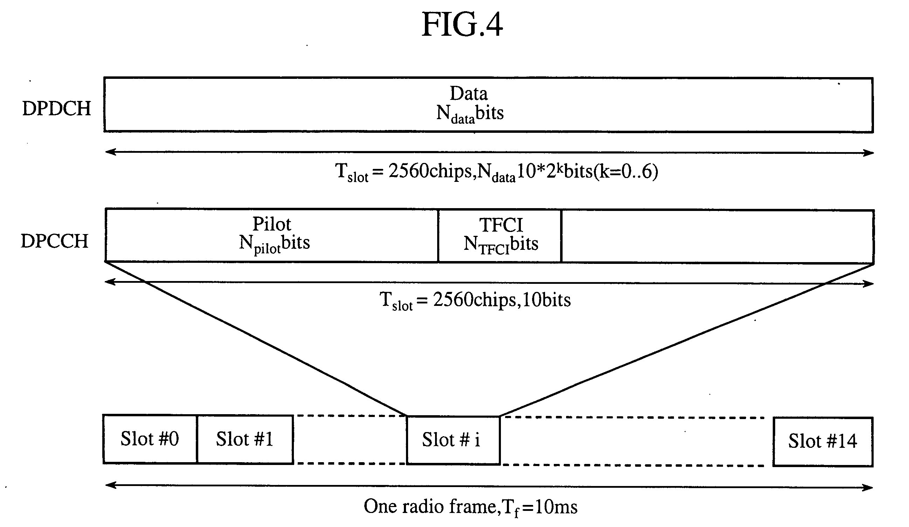

Fig. 4 is a diagram illustrating a format of the channels (DPDCH/DPCCH) of the uplink 4 before spreading. Since the DPDCH and DPCCH of the uplink 4 are subjected to the IQ multiplexing as described above, the individual channels are illustrated in parallel. The uplink 4 also uses a slot as a fundamental transmission time unit, and a frame having 15 slot as one unit. The length of one frame is 10 ms.

The DPDCH includes a data field, and the DPCCH includes a pilot signal field (Pilot), a transport format combination indicator field (TFCI) , a feedback information field (FBI) , and a downlink transmit power control command field (TPC).

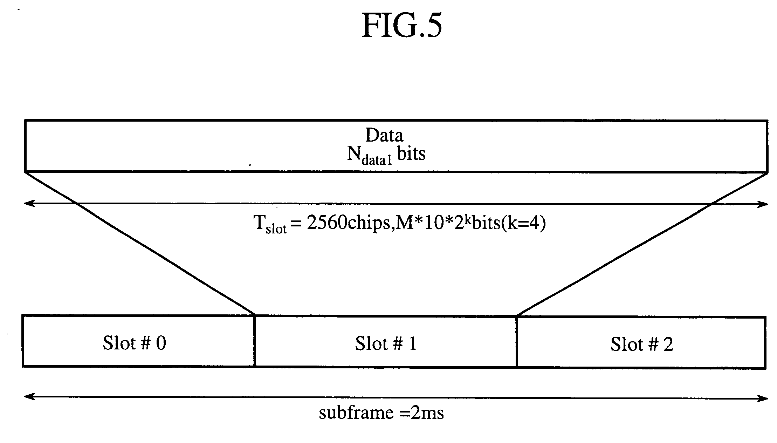

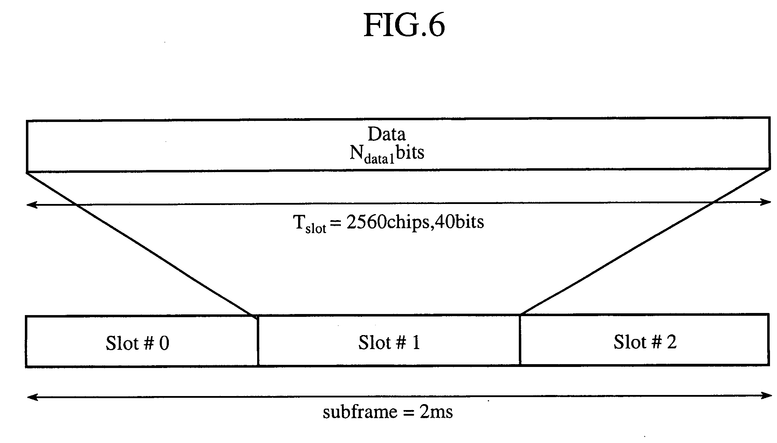

Fig. 5 is a diagram illustrating a format of "HS-PDSCH", a channel of the downlink 5, before spreading, and Fig. 6 is a diagram illustrating a format of another channel (HS-SCCH) of the downlink 5 before spreading. Both the HS-PDSCH and HS-SCCH uses a subframe as a fundamental transmission time unit, in which case five subframes constitute one frame. Accordingly, one subframe corresponds to three slots.

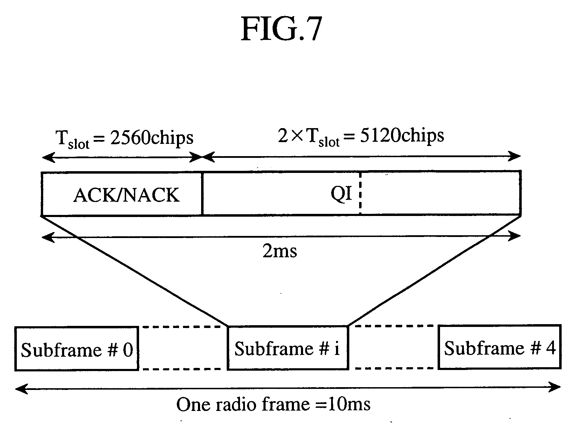

Fig. 7 is a diagram illustrating a format of a channel (HS-DPCCH) of the uplink 6 before spreading. The HS-DPCCH also uses a subframe as a fundamental transmission time unit, in which case five subframes constitute one frame. Accordingly, one subframe corresponds to three slots (= 2 msec).

It has been studied to separate the ACK/NACK field from the QI field in time, and to assign the QI twice the time assigned to the ACK/NACK. In this connection, the period k and offset of the QI are represented using the subframe as a unit.

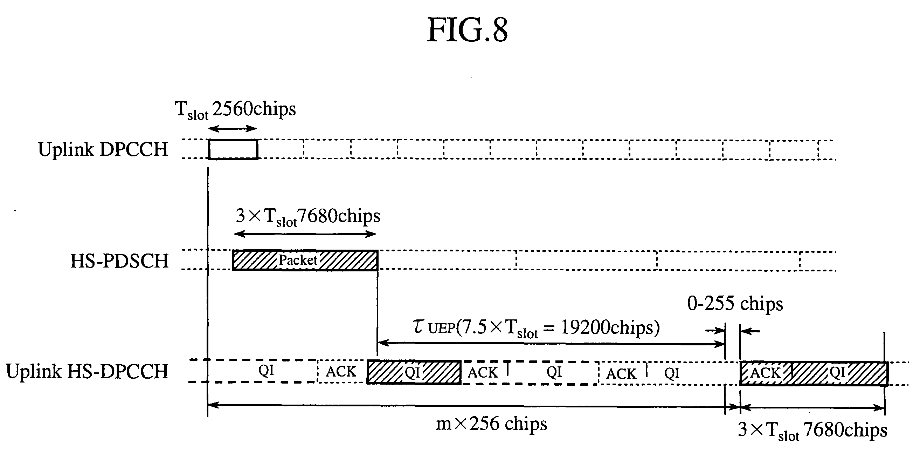

Fig. 8 is a diagram illustrating communication timing when using the HSDPA. Fig. 8 illustrates the transmission timing of the DPCCH and HS-DPCCH belonging to the uplink channel, and the HS-PDSCH belonging to the downlink channel. In Fig. 8, Tslot represents one slot.

Since the HS-PDSCH for transmitting a packet is a shared channel as described above, its timing is common to all the mobile stations 2 communicating with a certain base station. Consequently, the timing of the HS-DPCCH for transmitting the ACK/NACK response must be adjusted to the HS-PDSCH, and hence is common to all the mobile stations 2 communicating with the certain base station.

In Fig. 8, the transmission of an ACK response ("ACK" in Fig. 8) to a HSDPA packet ("Packet" in Fig. 8) starts after about 7.5 slots following the end of the packet, and the QI ("QI" in Fig. 8) is transmitted twice.

On the other hand, the standard specifies that the timing of the uplink DPCCH is adjusted to the timing of the individual channels DPDCH/DPCCH of the downlink 3, and that the timing of the DPDCH/DPCCH of the downlink is shifted from mobile station to mobile station.

Thus, the mutual timings at the boundaries of the fundamental transmission unit of the DPCCH and HS-DPCCH differ from mobile station to mobile station.

The WCDMA communication using only the conventional links (downlink 3 and uplink 4) controls the downlink transmit power and uplink transmit power independently (TPC: Transmit Power Control), and the control timing is placed at the boundaries of the slots. As for timing examples of the transmit power control, refer to TS25.214 V5.0.0 (2002-03) "Physical layer procedures (FDD) (Release 5)".

On the other hand, as for the HS-DPCCH which is a channel for the HSDPA, the foregoing TPC is applied. In addition, whether to transmit the ACK/NACK and QI separately or not is controlled independently. Accordingly, the power of the channel varies not only at the boundaries of the subframes (= 3 slot long), but also at the boundaries of the ACK/NACK and QI.

Consequently, considering the total transmit power transmitted from the mobile station, the transmit power is controlled not only at the timing of the TPC of the conventional channel, but also at the timing of the individual fields of the HS-DPCCH.

In addition, since the timing of the conventional channel and the timing of the HSDPA channel vary from mobile station to mobile station as described above, the transmit power varies halfway through the fields of each channel, and the variation timings vary from mobile station to mobile station.

Generally, an amplifier of the transmitter of the mobile station has nonlinear input/output characteristics. Thus, the output signal has distortion with respect to the input signal. The distortion is divided into the distortion of signal amplitude and the distortion of a signal phase.

The channel signal transmitted from the mobile station is received and demodulated by the base station. In this case, the base station detects the reference timing (or reference phase) for the demodulation using pilot data contained in the DPCCH of the uplink 4. However, the variations in the total transmit power of the mobile station do not always occur at convenient timings such as at the boundaries of the slots. Consequently, the distortion caused by the nonlinearity of the amplifier of the mobile station can present a problem of deviating the phase of the QI fields from the phase of the timing of the Pilot fields, or a problem of varying the phase even within the Pilot field itself. This offers a problem of deteriorating the detection accuracy of the reference phase in the base station that carries out the demodulation with reference to the Pilot, thereby deteriorating the receiving performance.

Next, in the WCDMA, the conventional links (3 and 4) carry out the so-called soft handover (SHO) that enables simultaneous communication with a plurality of base station. In contrast, it has been studied that the HSDPA links (5 and 6) do not carry out the SHO, but communicate only with one base station at a given time.

Furthermore, it has been studied that the transmit power of the HSDPA link 6 is basically in accordance with the uplink transmit power control of the conventional channel (additional consideration has been made to provide offset to the transmit power to handle the HSDPA that cannot carry out the SHO).

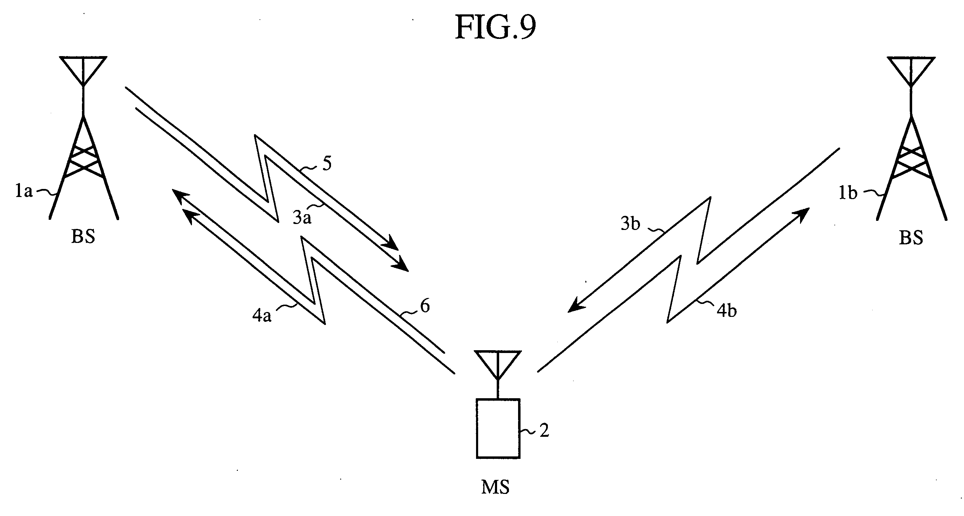

Fig. 9 is a diagram illustrating a problem of the conventional communication system involved in the SHO. Fig. 9 shows an example in which one mobile station communicates with two base stations as a communication system in the SHO state. In Fig. 9, reference numerals 1a and 1b each designate a base station, and the reference numeral 2 designates a mobile station. The reference numerals 3a and 3b each designate a downlink (for conventional use) and 4a and 4b each designate an uplink (for conventional use). The reference numeral 5 designates a downlink (for HSDPA) and 6 designates an uplink (for HSDPA).

Next, the operation will be described.

The mobile station 2 combines received signals from the conventional downlinks 3a and 3b, generates a downlink transmit power control (TPC) command from the combined results, and transmits the TPC command to the base stations 1a and 1b. The base stations 1a and 1b control the downlink transmit power in accordance with the TPC command.

On the other hand, the base stations 1a and 1b receive the uplinks 4a and 4b, respectively, each generate an uplink transmit power control (TPC) command from the received results, and transmit the TPC command to the mobile station 2. The mobile station 2 combines the commands transmitted from the individual base stations, and controls the transmit power.

The power transmitted from the mobile station 2 is obtained by combining the commands from the individual base stations. Thus, considering the case where the mobile station 2 moves from the base station 1a to the base station 1b, the transmit power from the mobile station 2 to the base station 1a decreases as the communication condition with the base station 1b improves. This hinders the base station 1a communicating through the HSDPA links (5 and 6) from receiving enough power via the DPDCH/DPCCH and HS-DPCCH, thereby presenting a problem in that it is difficult to hold the performance and links of the communication with the base station 1a.

With the foregoing configuration, the conventional communication system has a problem of deteriorating the total receiving performance of the base station because of the deterioration in the detection performance of the reference timing (or reference phase) in the base station, and the deterioration in the receiving performance not only of the conventional channel, but also of the HSDPA channel.

The present invention is implemented to solve the foregoing problem. Therefore it is an object of the present invention to reduce the deterioration in the receiving performance of the base station by reducing the deterioration in the reference phase detection performance in the reception by the base station.

### DISCLOSURE OF THE INVENTION

According to a first aspect of the present invention, there is provided a communication system including a mobile station capable of transmitting a plurality of control channels, wherein at least one of the control channels has pilot data placed separately at a plurality of positions within a transmission unit time.

Thus, it offers an advantage of being able to reduce the deterioration in the phase detection accuracy, and to reduce the deterioration in the receiving performance of the base station.

In the communication system, the plurality of positions may be assigned to fields formed by dividing the transmission unit time into a plurality of subdivisions.

Thus, it offers an advantage of being able to detect the phase fluctuations of each field, and to detect and receive the reference phase independently in each field.

The communication system may employ a CDMA scheme in which the pilots can be placed at a plurality of positions within the transmission unit time when the mobile station is in a soft handover state.

Thus, it offers an advantage of being able to reduce the deterioration in the performance of the communication with the HSDPA communication base station.

According to a second aspect of the present invention, there is provided a communication system including a mobile station capable of transmitting a channel in which pilot data is included and a transmission rate of data other than the pilot data is variable, wherein a transmission rate of the pilot data is varied in response to the transmission rate of the data other than the pilot data.

Thus, it offers an advantage of being able to reduce the deterioration in the phase detection accuracy, and to reduce the deterioration in the receiving performance of the base station.

In the communication system, the pilot data can be transmitted uninterruptedly in a field including no other data but the pilot data.

Thus, it can reduce the fluctuations in the channel power of the HS-DPCCH and the total transmit power of the mobile station, and reduce the generation of the high frequency signal components due to the transmission of the pulses narrower than the slot duration. This offers an advantage of being able to reduce the occurrence of the so-called "hearing aid problem" in that a hearing aid and the like detects a power envelope of the radio signal, and causes interference.

The communication system may employ a CDMA scheme in which the transmission rate of the pilot data is varied when the mobile station is in a soft handover state.

Thus, it offers an advantage of being able to reduce the deterioration in the performance of the communication with the HSDPA communication base station.

### BRIEF DESCRIPTION OF THE DRAWINGS

Fig. 1 is a schematic diagram showing a conventional W-CDMA communication system;
Fig. 2 is a schematic diagram showing a W-CDMA communication system including a HSDPA link (channel), which is an extension of the conventional W-CDMA communication system;
Fig. 3 is a diagram illustrating a format of downlink channels (DPDCH/DPCCH);
Fig. 4 is a diagram illustrating a format of uplink channels (DPDCH/DPCCH);
Fig. 5 is a diagram illustrating a format of a downlink channel (HS-PDSCH);
Fig. 6 is a diagram illustrating a format of a downlink channel (HS-SCCH);
Fig. 7 is a diagram illustrating a format of an uplink channel (HS-DPCCH);
Fig. 8 is a diagram illustrating communication timing when using HSDPA;
Fig. 9 is a diagram illustrating a problemof the conventional communication system at a SHO;
Fig. 10 is a diagram illustrating a format of the HS-DPCCH in the communication system of an embodiment 1 in accordance with the present invention; and
Fig. 11 is a diagram illustrating communication timing of the communication system of an embodiment 2 in accordance with the present invention.

### BEST MODE FOR CARRYING OUT THE INVENTION

The best mode for carrying out the invention will now be described with reference to the accompanying drawings to explain the present invention in more detail.

### EMBODIMENT 1

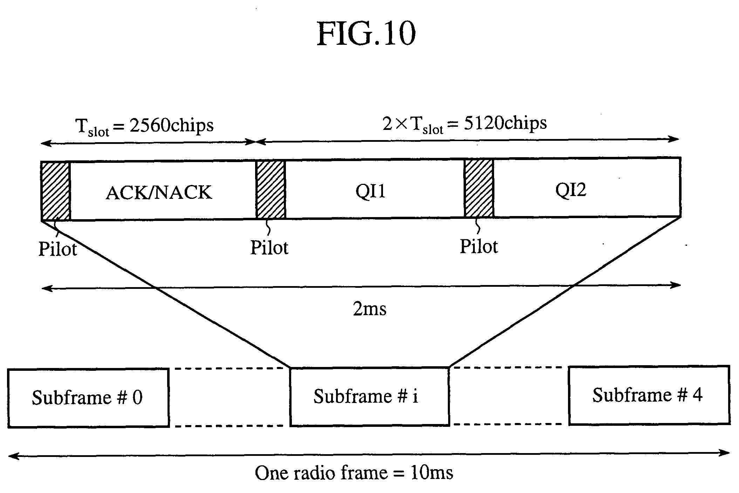

Fig. 10 is a diagram showing a format of the HS-DPCCH in the communication system of an embodiment 1 in accordance with the present invention.

Next, the operation will be described.

The communication system of the embodiment 1 can have a system configuration as shown in Fig. 2 including a HSDPA link (channel).

As shown in Fig. 10, the embodiment 1 has pilot fields ("Pilot") distributed before an ACK/NACK field ("ACK/NACK"), a QI first field ("QI1") and a QI second field ("QI2"). The distributed pilot fields are provided at nearly regular intervals.

Placing the pilots at a plurality of positions in this way makes it possible for the base station 1 to reduce the deterioration in the phase detection accuracy by adopting the average phase obtained from the distributed pilots as the reference phase of the demodulation, or by determining the reference phase in each field from the distributed pilots, even if the phase of the signal transmitted from the mobile station 2 fluctuates because of the variations in the relationships between the DPCCH and HS-DPCCH in each mobile station 2. This offers an advantage of being able to reduce the deterioration in the receiving performance of the base station 1.

In addition, since the pilots are distributed in the ACK/NACK fields and QI fields separately, the phase fluctuations can be detected independently in the ACK/NACK and QI fields. This offers an advantage of being able to detect and receive the reference phase separately in the individual fields.

In addition, since the pilots are inserted at nearly regular intervals, the placement of the pilots similar to that in the pilot channel in the consecutive slots in the conventional channel is achieved in the HS-DPCCH. This offers an advantage of being able to detect the phase independently of the mutual timing relationships between the DPCCH and HS-DPCCH.

Furthermore, as for the base station 1 communicating through the HSDPA, the total power of the pilot signals increases because the pilots ("Pilot" in Figs. 3 and 4) are included not only in the DPCCH as in the conventional system, but also in the HS-DPCCH. This makes it possible to reduce the deterioration in holding the link, and to reduce the locations where communication is impossible because the power arriving at the base station 1 is decreased because of fading. This offers an advantage of being able to carry out more stable communication.

Moreover, applying the present embodiment 1 to the SHO offers an advantage of being able to reduce the deterioration in the performance of the communication with the HSDPA communication base station when the uplink power control command from the HSDPA communication base station does not match the actual uplink transmit power of the mobile station.

As described above, the present embodiment 1 is configured such that it divides the HS-DPCCH into a plurality of fields, and inserts the pilot into each of the fields. Thus, it offers an advantage of being able to reduce the deterioration in the receiving performance of the base station 1.

Incidentally, although the present embodiment 1 determines the positions of the pilots uniquely, this is not essential. For example, such a configuration is also possible that when establishing a link at which the timing relationships between the DPCCH and HS-DPCCH are determined, the base station notifies the mobile station of the pattern information selected from a plurality of placement patterns in response to the determined timing relationships. This enables the communication using the most effective placement for preventing the deterioration in the phase detection accuracy at the timing relationships. This offers an advantage of being able to reduce the deterioration in the base station receiving performance.

In addition, although the embodiment 1 describes the pilot, ACK/NACK and QI as separate data, this is not essential. For example, data can be used both as the pilot and ACK/NACK, or as the pilot and QI (for example, fixed pattern data "010101 ···01" can be assigned and transmitted in the ACK transmission, and fixed pattern data "101010···10" in the NACK transmission. Thus, it is not limited to the present embodiment 1.

As described above, the communication system of the embodiment 1 is configured such that in the mobile station (2) capable of transmitting a plurality of control channels (DPCCH and HS-DPCCH), the pilot data (Pilot) of at least one control channel (HS-DPCCH) is placed at a plurality of positions within the transmission unit time (Subframe) separately.

The communication system of the embodiment 1 is configured such that the plurality of positions are placed in the fields (ACK/NACK, QI1 and QI2) formed by dividing the transmission unit time (Subframe) into a plurality of subdivisions.

The communication system of the embodiment 1 is configured such that when the mobile station (2) is in the soft handover state, the pilots are placed at a plurality of positions within the transmission unit time (Subframe).

As is clear from the foregoing description, according to the present embodiment 1, the pilots are placed at a plurality of positions. Accordingly, the present embodiment 1 offers an advantage of being able to reduce the deterioration in the phase detection accuracy, and to reduce the deterioration in the base station receiving performance.

According to the present embodiment 1, the pilots are placed in the ACK/NACK fields and QI fields separately. Therefore the present embodiment 1 can detect the phase fluctuations of each of the ACK/NACK and QI fields independently, which offers an advantage of being able to detect and receive the reference phase separately in each field.

According to the present embodiment 1, since it is applicable to the SHO (soft handover) , it offers an advantage of being able to reduce the deterioration in the performance of the communication with the HSDPA communication base station.

### EMBODIMENT 2

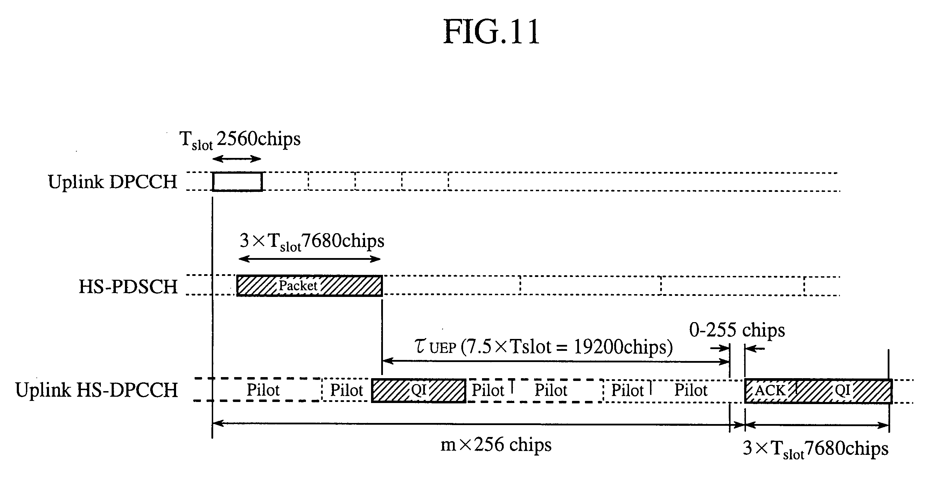

Fig. 11 is a diagram illustrating communication timing of the communication system of an embodiment 2 in accordance with the present invention.

Next, the operation will be described.

The communication system of the embodiment 2 can have a system configuration as shown in Fig. 2 including a HSDPA link (channel).

The communication timing of the embodiment 2 as illustrated in Fig. 11 differs from the communication timing as illustrated in Fig. 8 in that the pilot ("Pilot") is transmitted when neither ACK/NACK nor QI is transmitted.

Thus, the present embodiment 2 is configured such that the transmission rate of the pilots is adjusted to the transmission rate of the transmission data of the ACK/NACK or QI, and that the pilots are transmitted only when neither the ACK/NACK nor QI is transmitted. This makes it possible for the base station 1 to reduce the deterioration in the phase detection accuracy by adopting the average phase obtained from the frequently transmitted pilots as the reference phase of the demodulation, or by determining the reference phase from the pilots in each field, even if the phase of the signal transmitted from the mobile station 2 fluctuates because of the variations in the timing relationships between the DPCCH and HS-DPCCH in each mobile station 2. This offers an advantage of being able to reduce the deterioration in the receiving performance of the base station 1.

In addition, as for the base station 1 communicating through the HSDPA, the total power of the pilot signals increases because the pilots ("Pilot" in Figs. 3 and 4) are included not only in the DPCCH as in the conventional system, but also in the HS-DPCCH. This makes it possible to reduce the deterioration in holding the link, and to reduce the locations where communication is impossible because the power arriving at the base station 1 is decreased because of fading. This offers an advantage of being able to carry out more stable communication.

Furthermore, applying the present embodiment 2 to the SHO offers an advantage of being able to reduce the deterioration in the performance of the communication with the HSDPA communication base station when the uplink power control command from the HSDPA communication base station does not match the actual uplink transmit power of the mobile station.

Moreover, since the data are transmitted uninterruptedly throughout the HS-DPCCH in the present embodiment 2, the fluctuations in the channel power of the HS-DPCCH and the total transmit power of the mobile station become small, and the generation of the high frequency signal components due to the transmission of the pulses narrower than the slot duration is reduced. This offers an advantage of being able to reduce the occurrence of the so-called "hearing aidproblem" in that a hearing aid detects a power envelope of the radio signal, which causes interference.

Incidentally, although the embodiment 2 describes the pilot, ACK/NACK and QI as separate data, this is not essential. For example, data can be used both as the pilot and ACK/NACK, or as the pilot and QI (for example, fixed pattern data "010101 ···01" can be assigned and transmitted in the ACK transmission, and fixed pattern data "101010···10" in the NACK transmission. Thus, it is not limited to the present embodiment 2.

As described above, the communication system of the present embodiment 2 is configured such that in the mobile station (2) capable of transmitting the channel (HS-DPCCH) which includes the pilot data (Pilot) and can vary the transmission rate of the data (ACK/NACK and QI) other than the pilot data, the transmission rate of the pilot data is varied in response to the transmission rate of the data other than the pilot data.

The communication system of the present embodiment 2 is configured such that it transmits the pilot data uninterruptedly in the fields including no other data but the pilot data (ACK/NACK or QI).

The communication system of the present embodiment 2 is configured such that when the mobile station (2) is in a soft handover state, the transmission rate of the pilot data is varied.

As is clear from the foregoing description, according to the present embodiment 2, the transmission rate of the pilot is varied in response to the transmission rate of the transmission data ACK/NACK or QI, and transmits the pilot when neither the ACK/NACK nor QI is transmitted. Thus, the present embodiment 2 offers an advantage of being able to reduce the deterioration in the phase detection accuracy, and to reduce the deterioration in the base station receiving performance.

Moreover, since the data including the pilot data are transmitted uninterruptedly throughout the HS-DPCCH in the present embodiment 2, the fluctuations in the channel power of the HS-DPCCH and the total transmit power of the mobile station become smaller, and the generation is reduced of the high frequency signal components due to the transmission of the pulses narrower than the slot duration. This offers an advantage of being able to reduce the occurrence of the so-called "hearing aid problem" in that a hearing aid detects a power envelope of the radio signal, and causes interference.

According to the present embodiment 2, since it is applicable to the SHO (soft handover), it offers an advantage of being able to reduce the deterioration in the performance of the communication with the HSDPA communication base station.

### INDUSTRIAL APPLICABILITY

As described above, the communication system in accordance with the present invention is suitable for the communication system in which a plurality of mobile stations are present for each base station, and suitable for the communication system in which the mobile stations are present at a distance.

## Claims

1. A communication system including a mobile station (2) capable of transmitting a plurality of control channels (DPCCH and HS-DPCCH) , wherein at least one of the control channels (HS-DPCCH) has pilot data (Pilot) placed separately at a plurality of positions within a transmission unit time (Subframe).

2. The communication system according to claim 1, wherein the plurality of positions are assigned to fields (ACK/NACK, QI1 and QI2) formed by dividing the transmission unit time into a plurality of subdivisions.

3. The communication system according to claim 1, wherein when saidmobile station (2) is in a soft handover state, pilots (Pilot) are placed at a plurality of positions within the transmission unit time (Subframe).

4. A communication system including a mobile station (2) capable of transmitting a channel (HS-DPCCH) in which pilot data (Pilot) is included and a transmission rate of data (ACK/NACK and QI) other than the pilot data is variable, wherein a transmission rate of the pilot data is varied in response to the transmission rate of the data other than the pilot data.

5. The communication system according to claim 4, wherein the pilot data (Pilot) is transmitted uninterruptedly in a field including no other data but the pilot data.

6. The communication system according to claim 4, wherein when said mobile station (2) is in a soft handover state, the transmission rate of the pilot data is varied.
